# EUROPEAN PATENT APPLICATION

(11) **EP 1 349 025 A1**
(43) Date of publication of application: **01.10.2003**
(21) Application number: 03004011.7
(22) Date of filing: 24.02.2003
(51) Int. Cl.: G05B 19/042, G05B 23/02

(54) **Apparatus for remotely controlling and monitoring functions, particularly for domestic appliances**

(30) Priority: 27.03.2002 IT TO20020270
(71) Applicant: Urmet Domus S.p.A., 10154 Torino (IT)
(72) Inventor: Minarelli, Giorgio, 10129 Torino (IT)
(74) Representative: Spandonari, Carlo

(57) **Abstract**

A control unit (20) is connected in parallel to a cabled telephone line (10) through a telephone set provided with caller-identifying, SMS-messages decoding means (18). The control unit has a number of relay outputs (40, 42) and infrared-beam outputs (80) which control the activation of an equal number of devices on the basis of predetermined SMS messages received by authorized callers. Moreover, through a DTMF coder (28) and a SMS coder (30), the control unit can transmit SMS messages onto the line to predetermined callers on the basis of conditions of the devices or of the environment, which are detected through data inputs (52, 54, 56, 58, 60).

## Description

The present invention relates to an apparatus for remotely controlling and monitoring functions, particularly for domestic appliances.

Nowadays, urban dwellings are usually provided with several types of appliances which are controllable to perform functions of several kinds. Thus, the thermostat of a heating and/or air-conditioning system may be controlled to bring and maintain the ambient temperature at a desired level; an anti-intrusion or fire-alarm system may be enabled or disabled; a video recorder may be activated or programmed to be switched on at a certain time on a determined channel; a number of other appliances are available for enabling or disabling functions, e.g., for irrigating gardens or home plants, feeding domestic animals, etc.

The above-mentioned appliances are usually turned on by simple switches or, for more advanced functions, by radio or infra-red remote controls, but in any case the user must be present in the premises for operating them. Mainly in the case of vacation houses, which are only desultorily occupied, it would be desirable to enable, control or disable the various functions by commands sent by telephone.

However, although nowadays models of some of the above appliances are available that are remote-controlled by phone, this is only a partial solution of the problem, because it deals with only one of the appliances, leaving aside that such a solution implies a considerable burden for the user to replace the old apparatus.

Therefore, the object of the present invention is to provide an apparatus for remotely controlling functions by phone, particularly for domestic appliances of the above kind, which can be easily installed and interfaced to control an arbitrary number of conventional appliances, at low cost and high ease of use.

Another object of the invention is to provide said control apparatus so that it also provides monitoring, also by phone, on desired functions, such as the environmental temperature, the alarm state of an anti-intrusion system and the nature of the intrusion, the ambient noises inside the home (room monitoring), and other.

The above-mentioned objects and advantages, such as will appear from the following description, are achieved by the invention with an apparatus for remotely controlling and monitoring functions, particularly for domestic appliances, having the features recited in the main claims.

Other advantageous features are stated in the remaining claims.

A preferred embodiment of the invention will be now described, given by way of non limiting example with reference to the attached drawings, wherein:
Fig. 1 is a general diagram of a preferred embodiment of a controlling and monitoring apparatus according to the invention, which apparatus is installed in a home;
Fig. 2 is a partial block diagram of an alternative embodiment of the apparatus of the invention;
Fig. 3 is a partial block diagram of a further alternative embodiment of the apparatus of the invention.

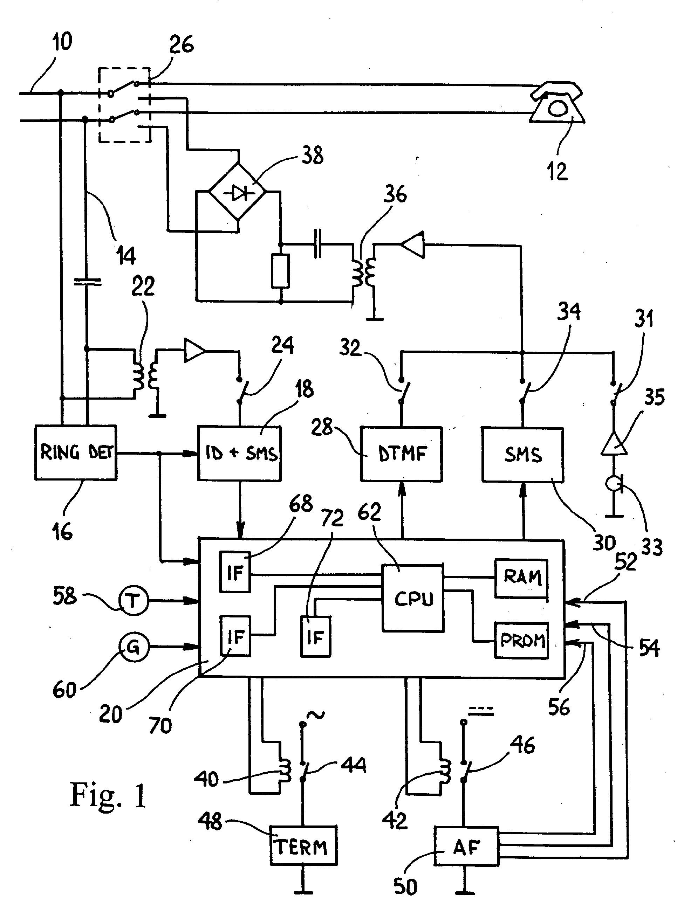

With reference to Fig. 1, a telephone line 10 of a cabled telephone network is connected to one or more conventional telephone sets such as 12 in a dwelling, not shown. A call detector 16 (ring detector) and a caller-identity, SMS-message decoder 18, which interact with each other and with a control unit 20 that will be described below, are also connected in parallel to line 10 through a line 14. Call detector 16 directly receives the signal through line 14, while decoder 18 receives the signal by an isolation transformer 22 and a reception-enabling switch 24.

In telephone line 10 is also inserted a two-way switch 26, which allows control unit 20 to engage telephone line 10 and to originate calls. To this purpose, control unit 20 controls a DTMF coder 28 and a SMS-message coder 30 which, via enabling switches 32, 34, an isolation transformer 36 and a bridge rectifier 38, can send dial tones and data onto line 10, through switch 26. A microphone 33 with an amplifier 35 is also connectable to isolation transformer 36, through a further enabling switch 31.

For the sake of simplicity, the control means for switches 24, 26, 32, 34, 31, are not shown in Fig. 1 because they will be obvious to the person skilled in the art.

Control unit 20 controls a number of relay outputs such as 40, 42 to close or open switches 44, 46 for powering domestic appliances such as, e.g., a thermostat 48 of a heating system (not shown) and a burglar alarm system 50 also having a number of alarm outputs which are connected to respective inputs 52, 54, 56 of the control unit. A temperature sensor 58 and a gas sensor 60, shown by way of mere example among the various possible devices, are also connected to the control unit.

Control unit 20 is a computing unit provided, in a way that is known to the person skilled in the art, with a microprocessor 62 interacting with a permanent memory bank 64 and a RAM memory bank 66, and with I/O interfaces such as 68, 70, 72, for interacting with the different devices.

Control unit 20 is programmed to verify, at each incoming telephone call, the identity of the caller, and if the caller matches with one or more of the authorized identities, in order to construe, according to a dictionary contained in the memory, any SMS commands on the basis of a dictionary of instruction messages stored in its memory, and to emit appropriate, corresponding commands to appliances on its outputs, both in the form of on/off commands, and in the form of more advanced codes, as will be explained below. Moreover, either on the basis of received interrogation messages, or on the basis of alarms sent by any of the appliances under control, control unit 20 can engage telephone line 10 through switch 26, call a predetermined number and generate a SMS message indicating a condition such as the environmental temperature, a possible power failure, an alarm of the burglar alarm system, etc.

The SMS messages may be sent by any cellular telephone, or even by a telephone belonging to the cabled network, should the network administrator provide this service, but it can also be envisaged that a service center is set up to which the user supplies the appropriate data by voice, so that a corresponding call will be made by the service center with an appropriate SMS message.

By way of example, in order to switch on the heating in his dwelling, the user calls his home telephone number and sends the predetermined SMS message <Heating ON>. The control apparatus answers the call, decodes the message, identifies the caller as authorized to give instructions, and generates a command signal on the appropriate output to close the switch 44 powering thermostat 48. Likewise, the message <Antitheft ON> will cause the antitheft-system to be enabled. Vice versa, in case of power failure, the apparatus of the invention, if so programmed, will call one or more predetermined telephone numbers and will send the message < power failure >.

For each sensor, the message to be sent may be single (such as in the case of a power failure), or alternatively, multiple messages may be provided which are selectable according to the specific signaled function. In case, e.g., the alarm comes from the burglar alarm system, a single message <Burglar alarm> may be provided, or a series of specific messages such as:
< Burglar alarm: kitchen sensor>
< Burglar alarm: hall sensor>
...
according to the specific violation occurred.

Such informative messages can be provided by the apparatus of the invention not only due to of a stimulation coming from an appliance, but also on user request. For example, in order to learn the ambient temperature in a mountain resort house, the user sends a message <ambient temperature?>, to which the control unit will answer by reading the temperature value from sensor 52 and then emitting a message such as <Temp 14 °C>. The message <ambient noise> causes microphone 33 to be enabled for listening by telephone to the noises in the room where the microphone is installed, e.g., in order to verify the situation after a burglar alarm (so-called "room monitoring" function).

The apparatus is pre-programmed for a number of the most widely used standard functions but, when first installed, it should be programmed with additional parameters, in particular with the authorized telephone numbers, and anyhow it may be successively updated and modified on the basis of programming codes which are also sent in form of SMS messages. Programming may be performed by the user himself, by means of a PC computer provided with a suitable program, or alternatively, the updates of the programming of the apparatus may be performed by a dedicated service center, on request of the user.

Programming of the control unit for attaining the above-mentioned functions is obvious for the person skilled in the art, and can be performed in various ways depending on the hardware, on the choices of the basic software, etc. Thus, for simplicity, the software in the unit will be not described herein.

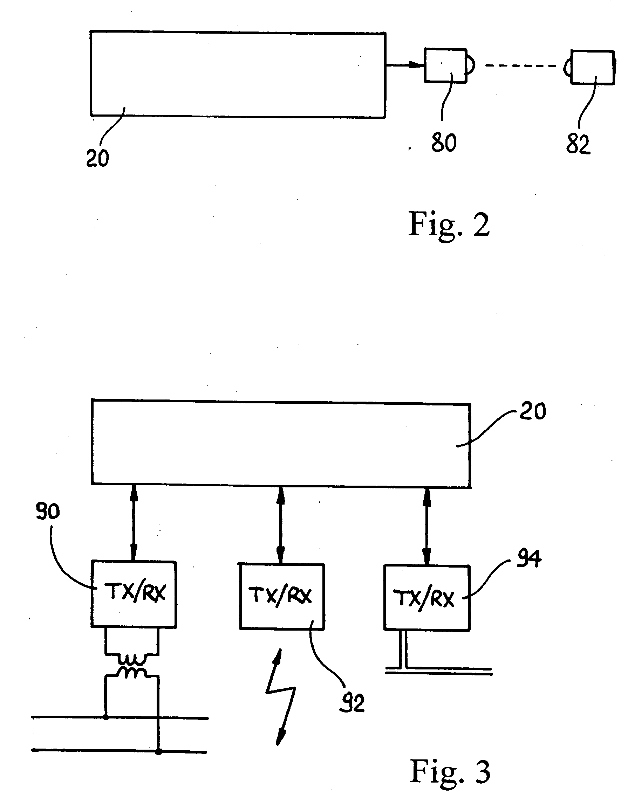

Fig. 2 shows a portion of an alternative embodiment of the apparatus of Fig. 1, wherein, in addition to, or in place of, relay outputs 40, 42, and in addition to all the other components already listed, the control unit controls one or more infrared-beam command coders such as coder 80, which emits command codes to be received by a domestic appliance 82 which is controllable by an infrared remote control, typically an air-conditioner, a video recorder, etc.

For a more advanced interfacing to appliances provided with capability of addressing via a bus and for wireless connection, the controlling and monitoring apparatus according to the invention may also comprise, in addition to the components already described, one or more interfacing modules such as those shown in Fig. 3, where the control unit is provided with a module 94 for bus-interfacing, a module 92 for radio-interfacing, and a module 90 for addressing via waves which are piped through the power supply network in the dwelling. Such modules may be present simultaneously or alternatively for a two-way communication with addressable appliances, as known to the person skilled in the art.

It is understood that many changes to the preferred embodiments above described are possible, by removing or adding some functions. For example, on the basis of the teachings of the invention, a control apparatus may be merely provided with functions for switching on appliances on the basis of instructions given from outside via SMS messages, without monitoring, or, vice versa, the apparatus may be set up exclusively for transmitting information, autonomously or under request, about various conditions in the monitored premises (temperature, power supplying, burglar alarms, gas alarm, or the like).

## Claims

1. An apparatus for remotely controlling and monitoring functions, particularly for domestic appliances, **characterized in that** it comprises:
- a telephone set (12), which is connectable in parallel to a cabled telephone line (10), and comprises a call detector (16) adapted to activate caller-identifying, SMS-messages decoding means (18) at each call;
- a control unit (20) having a number of relay outputs (40, 42) connectable to the power supply of an equal number of devices to be activated, and which is connected to said telephone set (12) for receiving the caller identity and the SMS message from it and, after having verified that the caller belongs to a list of authorized callers, for interpreting the SMS message according to a predetermined program in order to activate a corresponding one of said number of relay outputs.

2. An apparatus for remotely controlling and monitoring functions, particularly for domestic appliances, **characterized in that** it comprises:
- a telephone set (12), which is connectable in parallel to a cabled telephone line (10), and comprises a DTMF coder (28) for emitting dial tones onto the line (10) and a SMS coder (30) for transmitting SMS messages onto the line (10);
- a control unit having a number of data inputs, which is connected to said telephone set (12) and is programmed for calling a predetermined telephone number and for transmitting a SMS signal to said telephone number informing about a condition detected on one of said data inputs.

3. The control apparatus according to claim 1 or 2, **characterized in that** it also comprises at least one infrared-beam output for activating a device provided with an infrared interface for remote controls.

4. The control apparatus according to anyone of claims 1 to 3, **characterized in that** it also comprises an environmental temperature sensor (58) and is programmed to transmit a message containing the temperature value, upon reception of a request SMS-message.

5. The control apparatus according to anyone of claims 1 to 3, **characterized in that** it also comprises a microphone (33) subjected to the environmental noises, and is programmed to connect the microphone to the telephone line (10), upon reception of a request SMS-message.

6. The control apparatus according to anyone of claims 1 to 5, **characterized in that** it also comprises a module (94) for interfacing with a bus which is connectable to desired devices.

7. The control apparatus according to anyone of claims 1 to 6, **characterized in that** it also comprises an interface module (92) which is connectable via radio to desired devices.

8. The control apparatus according to anyone of claims 1 to 7, **characterized in that** it also comprises a guided-waves interface module (90) which is connectable to desired devices through the power supply network in the dwelling.
